(19) Europäisches Patentamt
European Patent Office
Office européen des brevets

(11) Veröffentlichungsnummer: **0 146 775**
**B1**

(12) # EUROPÄISCHE PATENTSCHRIFT

(45) Veröffentlichungstag der Patentschrift: **25.10.89**

(51) Int. Cl.⁴: **B 29 C 65/34**

(21) Anmeldenummer: **84113931.4**

(22) Anmeldetag: **17.11.84**

(54) **Anordnung zum Verschweissen von Formteilen aus thermoplastischem Kunststoff.**

(30) Priorität: **19.12.83 CH 6737/83**

(43) Veröffentlichungstag der Anmeldung: **03.07.85 Patentblatt 85/27**

(45) Bekanntmachung des Hinweises auf die Patenterteilung: **25.10.89 Patentblatt 89/43**

(84) Benannte Vertragsstaaten: **AT BE DE FR GB IT LU NL SE**

(56) Entgegenhaltungen:
**AT-B-203 202**
**AT-B-263 349**
**DE-A-1 440 958**
**DE-A-2 264 047**
**FR-A-2 516 439**
**US-A-3 954 541**

(73) Patentinhaber: **GEORG FISCHER AKTIENGESELLSCHAFT, Mühlentalstrasse 105, CH-8201 Schaffhausen (CH)**

(72) Erfinder: **Thalmann, Alfred, Brunngasse 71, CH-8448 Uhwiesen (CH)**

**EP 0 146 775 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft eine Anordnung zum Verschweissen von zwei mindestens je eine Ausnehmung aufweisende Formteile miteinander und mit mindestens einem dazwischen in den Ausnehmungen angeordneten Teil wie sie im Oberbegriff von Anspruch 1 gekennzeichnet ist.

Durch die FR-A1-2 516 439 ist eine Anordnung zum Verschweissen von Formteilen aus Kunststoff mit Heizleitern der eingangs genannten Art bekanntgeworden. Die beiden zu verschweissenden Formteile weisen hierbei je eine halbkreisförmige Ausnehmung mit beidseits daran anschliessenden Stossflächen auf, wobei jeweils den beiden aufeinanderliegenden Stossflächen und einer halbkreisförmigen Ausnehmung ein Heizleiter zugeordnet ist. Durch Berührung der beiden Heizleiter an den Stosstellen zwischen Ausnehmung und Auflagefläche können Kurzschlüsse entstehen, welche zu Fehlschweissungen führen. Andererseits können bei zu kurzen Heizleitern nicht verschweißte Stellen entstehen, was zu undichten Schweissverbindungen führt.

Durch die AT-B-263 349 ist zwar ein Heizband bekanntgeworden, dessen Heizdrähte isoliert sind, um bei deren Berührungen Kurzschlüsse zu vermeiden. Eine derartige Isolierung muss bis etwa 150°C temperaturfest sowie chemisch und physikalisch resistent gegenüber dem zu verschweissenden Kunststoff sein, wodurch sie sehr aufwendig ist und auch eine gute Verschweissung beeinträchtigen kann.

Parallel geschaltete Heizleiter sind zwar durch die US-A-3 954 541 und die AT-B-203 202 bekanntgeworden, doch entsprechen die Anordnungen der zu verschweissenden Teile nicht der im Oberbegriff von Anspruch 1 genannten Art.

Zum Verbinden von Sattelstücken oder anderen, zwei Hälften aufweisenden Formteilen mit Rohren, ist es bekannt, (DE-B1-2 242 369) einteilige als Heizmatten ausgebildete Heizleiter zwischen dem Rohr und den Formstücken anzuordnen. Durch den dabei entstehenden Spalt zwischen den Mattenenden sind keine vollständigen Schweissverbindungen am gesamten Rohrumfang gewährleistet.

Mit der in der EP-A1-0 076 460 gezeigten Heizmattenanordnung wurde zwar versucht diesen Nachteil zu umgehen, doch ist diese Anordnung von Heizmatten nur für die in dieser Schrift gezeigten Anwendungsarten vorteilhaft verwendbar.

Ausgehend vom erstgenannten Stand der Technik ist es Aufgabe der vorliegenden Erfindung, eine Anordnung zum Schweissen von Formteilen aus thermoplastischem Kunststoff zu schaffen, bei welcher mindestens zwei Formteile, wie z. B. auch Gehäusehälften eines Gehäuses mit beliebig umlaufenden Stossflächen, miteinander und diese gleichzeitig mit in deren Ausnehmungen angeordneten bzw. einsteckbaren Teilen auch bei deren mehrfacher Anordnung durch eine durchgehend dichte und feste Schweissung bei nur einem Schweissvorgang verbindbar sind.

Erfindungsgemäss wird diese Aufgabe durch die kennzeichnenden Merkmale von Anspruch 1 gelöst.

Weitere vorteilhafte Ausgestaltungen sind durch die abhängigen Ansprüche gekennzeichnet.

Die erfindungsgemässe Lösung ermöglicht, dass jeweils ein Heizleiter auf die Stossfläche eines Formteiles gleichzeitig auch in eine beliebige Anzahl und auch unterschiedlich geformter Ausnehmungen mit eingelegt werden kann, so dass keine Unterbrechung an den Übergangsstellen zwischen den Stossflächen und den Ausnehmungen entstehen. Gleichzeitig wird durch die Parallelschaltung der beiden Heizleiter ein Übereinanderliegen ermöglicht, ohne dass durch deren Berührungen Kurzschlüsse entstehen können. Die auf dem gesamten Verlauf bzw. der Länge der Stossfläche liegenden durchgehenden Heizleiter gewährleisten eine feste und dichte Schweissverbindung, wobei nur ein Schweissgang erforderlich ist.

Weiterhin wird gemäss den erfindungsgemässen Merkmalen jeweils ein Anschluss eines oberen und eines unteren Heizleiters jeweils an einer Seite zusammen zu einem Anschluss verbunden. Der Strom fliesst immer durch alle Windungen von einer zu der anderen Seite, wobei für eine möglichst gleiche Energiezufuhr auch Voraussetzung ist, dass der ohmsche Widerstand bei beiden parallel geschalteten Heizleitern gleich oder annähernd gleich ist. Kurzschlüsse bzw. Teilkurzschlüsse sind somit nicht möglich.

Die Erfindung ist anhand von mehreren Ausführungsbeispielen in den bei liegenden Zeichnungen dargestellt und nachfolgend beschrieben.

Es zeigen:

Fig. 1 eine perspektivische Darstellung einer Anordnung zum Verschweissen von schalenförmigen Formteilen mit einem einzuführenden Teil,

Fig. 2 eine perspektivische Darstellung einer Anordnung zum Verschweissen von gehäuseförmigen Formteilen mit Kabeln oder Kabelschutzrohren bei einer Kabelverzweigung,

Fig. 3 eine perspektivische Darstellung einer Ausführungsvariante von Fig. 2 und

Fig. 4 eine Ansicht der bei der Anordnung gemäss Fig. 1 verwendeten Heizleiter im flachgelegten Zustand.

Fig. 1 zeigt die Anordnung zum Verschweissen von zwei schalenförmigen Formteilen 10a, 10b mit einem rohr-, stangen- oder kabelförmigen, dazwischen einzuführenden Teil 12 mittels zwei Heizleitern 3a und 3b. Die als Heizmatten 9a und 9b ausgebildeten Heizleiter 3a, 3b sind parallel geschaltet, wobei jede Heizmatte 9a bzw. 9b jeweils die ebenen Stossflächen 11 und die

inneren Umfangsflächen 13 von Ausnehmungen 21 jedes Formteiles 10a, 10b überdecken. Beim Zusammensetzen und Verschweissen kommen dann im Bereich der Stossflächen 11 die beiden Heizmatten 9a und 9b aufeinander zu liegen, was aber durch deren Parallelschaltung möglich ist. Das Teil 12 und somit auch die innere Umfangsfläche 13 können auch andere als den dargestellten runden Querschnitt aufweisen, d. h. Teil 12 kann im Querschnitt mehreckig oder oval ausgebildet sein.

Die beiden Enden 5a und 6a des Heizleiters 3a liegen dabei jeweils benachbart zu den Enden 5b und 6b des Heizleiters 3b und werden dabei an umfangsmässig gegenüberliegenden Stellen zu je einem Stromanschluss 7 und 8 zusammengefasst.

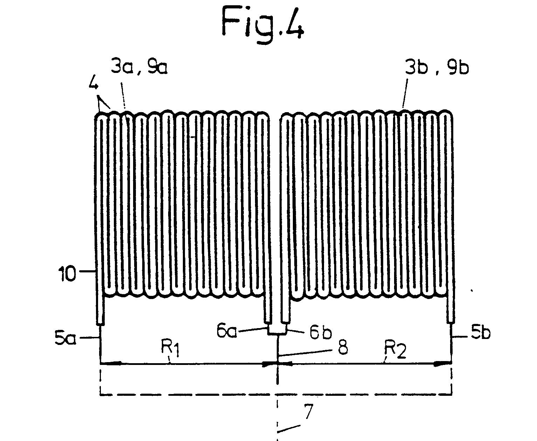

Aus Fig. 4 sind die bei Fig. 1 gezeigten Heizleiter 3a, 3b im flachgelegten Zustand dargestellt, wobei diese durch eine zick-zack-förmige Anordnung je eine Heizmatte 9a bzw. 9b bilden. Der Heizleiter 3a, 3b ist hierbei mit einem thermoplastischem Kunststoff ummantelt, so dass durch diese Isolation 10 die aneinanderliegenden Windungen 4 der Heizleiter 3a, 3b elektrisch voneinander getrennt sind. Sollten trotzdem zwei benachbarte Heizleiter beim Schweissvorgang miteinander in Berührung kommen, so wird höchstens eine Windung kurzgeschlossen, d. h. der ohmsche Gesamtwiderstand wird nur geringfügig verändert, was hier im Gegensatz zu einer bifilaren Wicklung keinen nennenswerten Einfluss auf die Güte der Schweissverbindung hat. Durch die beschriebene Verbindung der Enden der Heizleiter 3a und 3b entsteht eine Parallelschaltung der Heiz-Widerstände R1 und R2, deren ohmscher Einzelwiderstand gleich oder nahezu gleich ist.

Fig. 2 zeigt die Hälfte eines gehäuseförmigen Formteiles 20a, welches schalenförmige Ausnehmungen 21 aufweist. Mit einer zweiten, in der Figur 2 nur angedeuteten Gehäusehälfte 20b, sollen im Gehäuse angeordnete Verzweigungen von z. B. Telefonkabeln, dicht abgedeckt werden. Die im Durchmesser unterschiedlichen Kabel 22 werden zuerst entsprechend wie zu Fig. 2 beschrieben mit zwei schalenförmigen Formteilen 10a, 10b mittels einer Schweissverbindung versehen, welche dann in die Ausnehmungen 21 der Formteile 20a und 20b passen. Die Kabel können auch direkt in den Ausnehmungen liegend mit den Gehäusen verbunden werden.

Auf die umlaufende Stossfläche 23a des gehäuseförmigen Formteiles 20a werden zwei Heizleiter 24a und 25a gelegt. Auf die Stossfläche 23b des Formteiles 20b werden die Heizleiter 24b und 25b gelegt, wobei durch jeweiliges Zusammenfassen der Heizleiterenden zu je einem Stromanschluss 7 und 8 alle vier Heizleiter zueinander parallel geschaltet sind. Durch diese Anordnung liegen beim Aufeinandersetzen der beiden Gehäusehälften 20a und 20b zwischen den ebenen Partien der Stossflächen 23a und 23b jeweils zwei Heizleiter 24a und 24b bzw. 25a und 25b direkt übereinander und zwischen den inneren Umfangsflächen 13 der Ausnehmungen 21 und den Schalenformteilen 10a bzw. 10b jeweils nur ein Heizleiter 24a oder 24b oder 25a oder 25b.

Die ohmschen Einzelwiderstände der vier zueinander parallel geschalteten Heizleiter sollten ebenfalls gleich oder annähernd gleich sein. R1 = R2 = R3 = R4.

Die Heizleiter können wie zu Fig. 4 beschrieben als Heizdraht, als Heizmatte oder auch als ein Heizband ausgebildet sein. Bei der Ausbildung als Heizmatte gemäss Fig. 4 verlaufen deren Windungen 4 quer zum Verlauf der Stossflächen 23a, 23b. Der Heizleiter kann auch aus einem Blech oder Folie z. B. aus einer Kupferlegierung hergestellt sein, wobei der Heizleiter entsprechend der Form und den Abmessungen der Stossflächen der Formteile aus einem Blech ausgestanzt wird.

Fig. 3 zeigt eine Ausführungsvariante von Fig. 2, wobei zwei als T-förmige Gehäusehälften ausgebildete Formteile 20a, 20b miteinander und mit drei rohrförmigen Teilen 12 direkt durch eine Schweissung verbunden werden. Die Anordnung von vier parallel geschalteten Heizleitern 24a, 25a, 24b und 25b entspricht der zu der Fig. 2 beschriebenen Anordnung.

**Patentansprüche**

1. Anordnung zum Verschweissen von zwei mindestens je eine Ausnehmung (21) aufweisende Formteile (13a, 10b, 20a, 20b) miteinander und mit mindestens einem dazwischen in den Ausnehmungen (21) angeordneten Teil (12, 22, 10a, 10b) mittels elektrisch aufheizbaren Heizleitern, wobei einer Ausnehmung (21) und einer der angrenzenden Stossflächen (11) jedes Formteiles (10a, 10b, 20a, 20b) ein zusammenhängender Heizleiter zugeordnet ist, und dass die beiden Heizleiter zueinander parallel geschaltet sind, dadurch gekennzeichnet, dass ein durchgehender Heizleiter (3a, 3b, 24a, 24b, 25a, 25b) auf der gesamten Stossfläche (11, 23a, 23b) und der inneren Umfangsfläche (13) jeder in der Stossfläche angeordneten Ausnehmung (21) eines Formteiles (10a, 10b, 20a, 20b) aufliegt, wodurch im Bereich der Stossflächen (11, 23a, 23b) zwei Heizleiter (3a, 3b, 24a, 24b, 25a, 25b) Übereinanderliegend angeordnet sind, deren benachbarte Enden (5a, 5b bzw. 6a, 6b) jeweils zu einem Stromanschluss (7 bzw. 8) zusammengeschlossen werden, und dass die parallel geschalteten Heizleiter den gleichen oder annähernd den gleichen ohmschen Widerstand aufweisen.

2. Anordnung nach Anspruch 1, dadurch gekennzeichnet, dass der Heizleiter (3a, 3b, 24a, 24b, 25a, 25b) ein mit einem thermoplastischen Kunststoff ummantelter Widerstandsdraht ist, welcher durch einen windungsförmigen Verlauf eine Heizmatte (9a, 9b) bildet, deren Windungen quer zum Verlauf der Stossfläche angeordnet sind.

3. Anordnung nach Anspruch 1, dadurch gekennzeichnet, dass der Heizleiter (3a, 3b, 24a, 24b, 25a, 25b) als Heizband ausgebildet ist.

4. Verwendung der Anordnung zum Verschweissen gemäss einem der Ansprüche 1 bis 3, für die Herstellung von dichten Abzweiggehäusen (20a, 20b) bei der Kabelverlegung insbesondere von Telefonkabeln (22).

## Claims

1. An arrangement for welding together two moulded parts (10a, 10b, 20a, 20b) each having at least one recess (21) and having at least one part (12, 22, 10a, 10b) arranged between them in the recesses (21), by means of electrically heatable heating elements, wherein an associated heating element is provided for a recess (21) and one of the limiting surfaces (11) of each moulded part (10a, 10b, 20a, 20b) and in that the two heating elements are connected in parallel to one another, characterised in that a throughgoing heating element (3a, 3b, 24a, 24b, 25a, 25b) is disposed on the whole abutting surface (11, 23a, 23b) and upon the inner peripheral surface (13) of each recess (21) arranged in the abutting surface, so that two heating elements (3a, 3b, 24a, 24b, 25a, 25b) are arranged in superposition in the region of the abutting surfaces (11, 23a, 23b) the adjacent ends (5a, 5b respectively 6a, 6b) of which are respectively joined to a current connector (7 or 8) and that the parallel-connected heating elements have the same or approximately the same ohmic resistance.

2. An arrangement according to claim 1, characterized in that the heating element (3a, 3b, 24a, 24b, 25a, 25b) is a resistance wire sheathed with a thermoplastic plastics material, which forms a heating mat (9a, 9b) by reason of a coil-shaped arrangement, the coils of which are arranged transversely to the direction of the abutting surface.

3. An arrangement according to claim 1, characterized in that the heating element (3a, 3b, 24a, 24b, 25a, 25b) is formed as a heating strip.

4. The use of an arrangement for welding according to any of claims 1 to 3, for the manufacture of sealed junction houses (20a, 20b) in the installation of cables, in particular telephone cables (22).

## Revendications

1. Dispositif pour assembler par soudage deux pièces façonnées (10a, 10b, 20a, 20b,) pourvues chacune d'au moins un évidement (21) et à assembler lesdites pièces façonnées à au moins une pièce insérée (12, 22, 10a, 10b) dans lesdits évidements (21) entre lesdites pièces façonnées, le soudage étant effectué à l'aide de conducteurs électriques chauffants, un conducteur chauffant continu étant associé respectivement à un des évidements (21) et à une des surfaces de joint voisines (11) de chaque pièce façonnée (10a, 10b, 20a, 20b), tandis que les deux conducteurs chauffants sont branchés en parallèle, caractérisé en ce qu'un conducteur chauffant continu (3a, 3b, 24a, 24b, 25a, 25b) est placé sur la totalité de la surface de joint (11, 23a, 23b) et sur la surface périphérique intérieure (13) de chaque évidement (21) ménagé dans la surface de joint d'une pièce façonnée (10a, 10b, 20a, 20b), de sorte que dans la zone des surfaces de joint (11, 23a, 23b) deux conducteurs chauffants (3a, 3b, 24a, 24b, 25a, 25b) sont superposés l'un à l'autre et leurs extrémités voisines (5a, 5b ou 6a, 6b) sont réunies respectivement pour former une borne électrique (7 ou 8), et en ce que les conducteurs chauffants branchés en parallèle présentent des résistances ohmiques respectives égales ou approximativement égales.

2. Dispositif selon la revendication 1, caractérisé en ce que le conducteur chauffant (3a, 3b, 24a, 24b, 25a, 25b) est constitué par un fil de résistance enrobé d'une matière synthétique thermoplastique et disposé en spires de manière à former une natte chauffante (9a, 9b), les spires de ladite natte étant disposés transversalement à la surface de joint.

3. Dispositif selon la revendication 1, caractérisé en ce que le conducteur chauffant (3a, 3b, 24a, 24b, 25a, 25b) est formé par un ruban chauffant.

4. Utilisation du dispositif de soudage selon une des revendications 1 à 3 pour fabriquer des boîtiers d'embranchements étanches (20a, 20b) lors de l'installation de câble, notamment de câbles téléphoniques (22).

Fig. 1

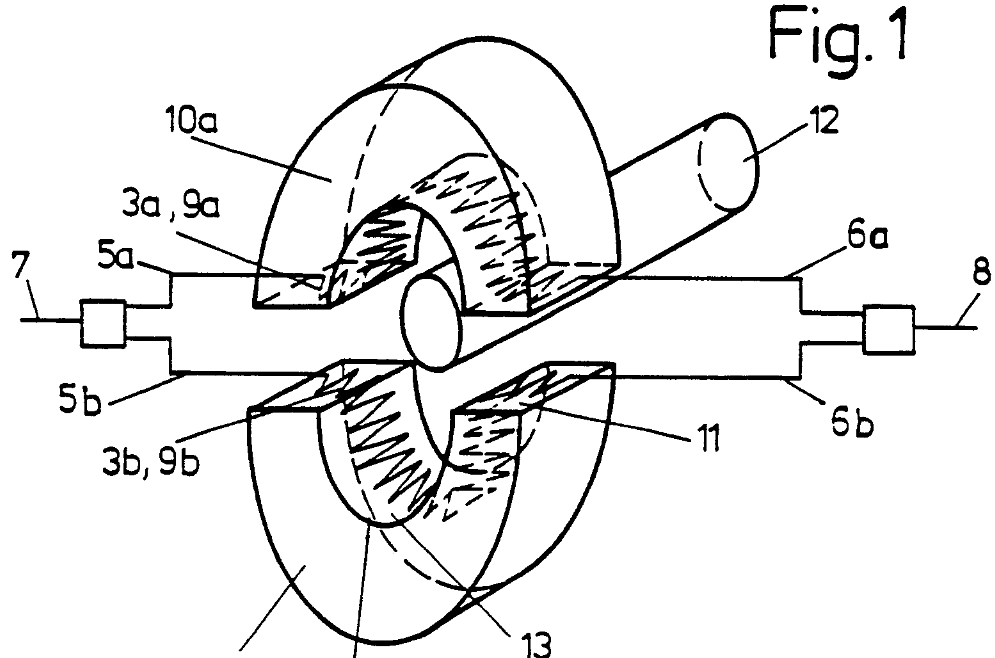
10a
12
3a, 9a
5a
6a
7
8
5b
6b
3b, 9b
11
10b
21
13

Fig. 2

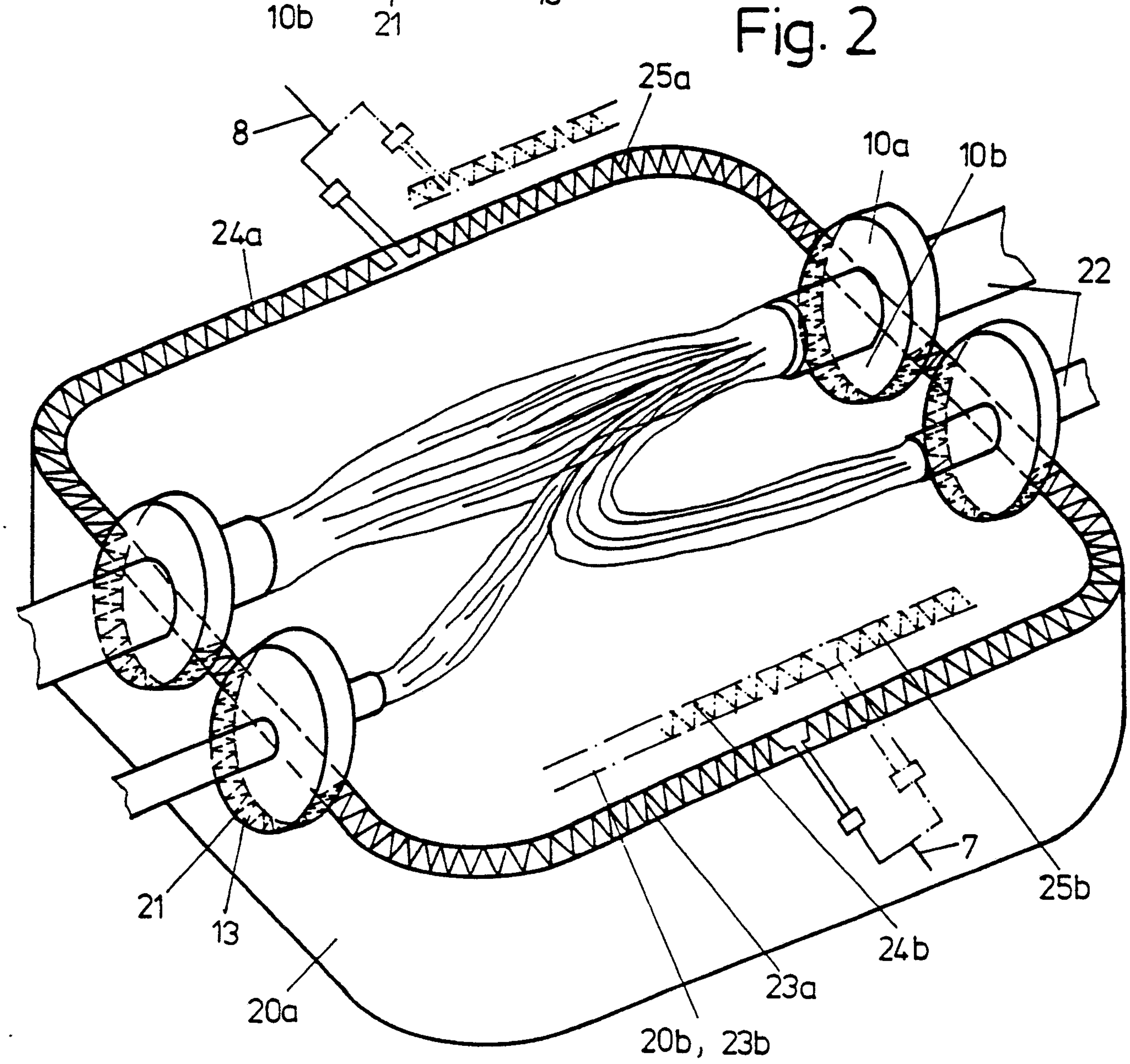
8
25a
10a
10b
24a
22
21
13
20a
7
25b
24b
23a
20b, 23b

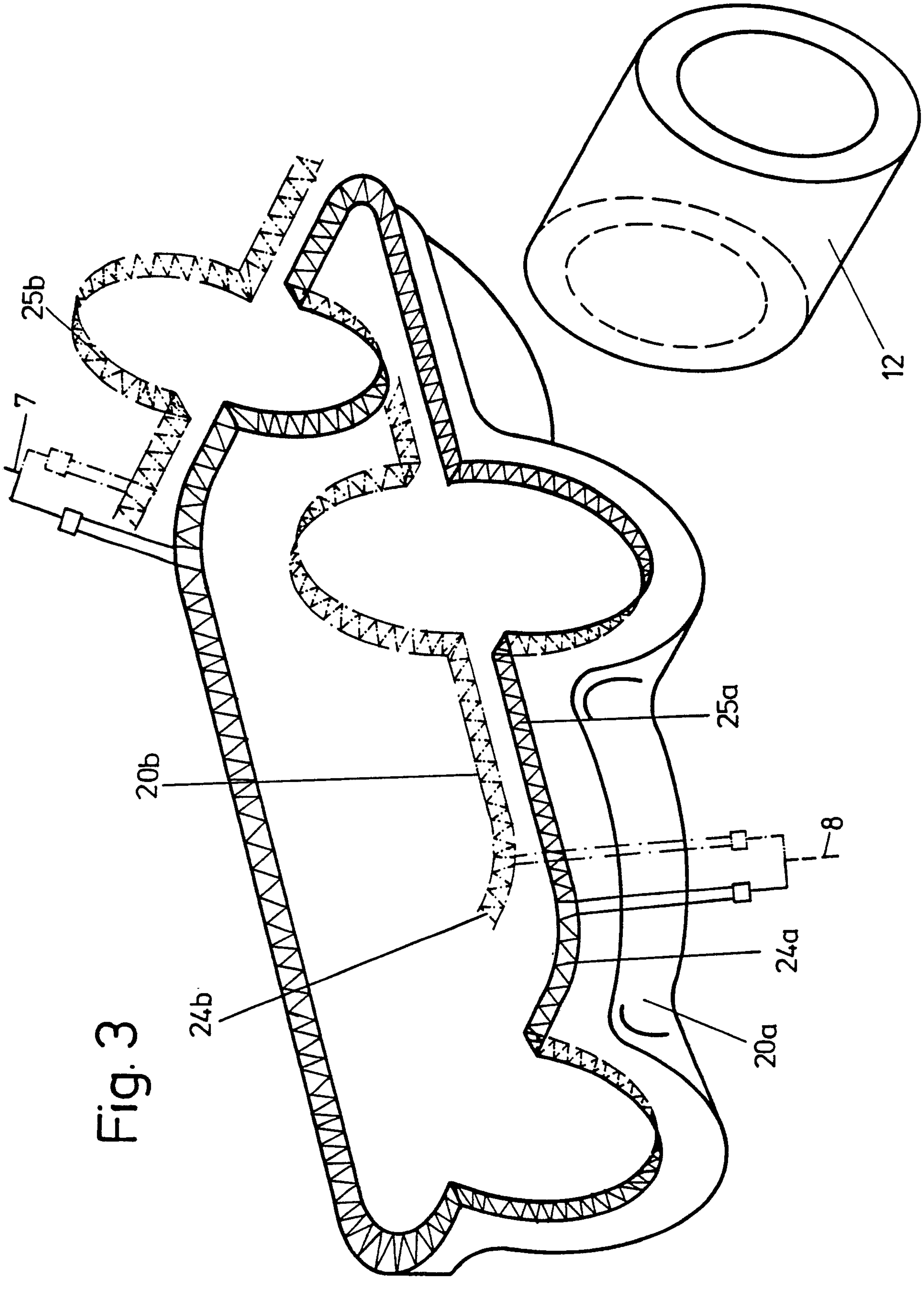


Fig. 3

Fig.4